Europäisches Patentamt

European Patent Office

Office européen des brevets

(11) Publication number: **0 318 793 B1**

# EUROPEAN PATENT SPECIFICATION

(45) Date of publication of patent specification: **08.02.95**

(51) Int. Cl.⁶: **C08L 25/02**, //(C08L25/02, 51:00),(C08L25/02,53:00)

(21) Application number: **88119375.9**

(22) Date of filing: **22.11.88**

The file contains technical information submitted after the application was filed and not included in this specification

(54) **Styrene-based resin composition.**

(30) Priority: **04.12.87 JP 305838/87**
**13.01.88 JP 3844/88**
**14.01.88 JP 4923/88**
**20.05.88 JP 121700/88**

(43) Date of publication of application:
**07.06.89 Bulletin 89/23**

(45) Publication of the grant of the patent:
**08.02.95 Bulletin 95/06**

(84) Designated Contracting States:
**AT BE CH DE ES FR GB IT LI NL SE**

(56) References cited:
**EP-A- 0 324 398**
**DE-A- 1 297 328**
**FR-A- 2 259 874**
**FR-A- 2 311 645**

**CHEMICAL ABSTRACTS, vol. 108, no. 18, 2nd May 1988, page 49, abstract no. 151651n, Columbus, Ohio, Us & JP-A-62257950**

(73) Proprietor: **IDEMITSU KOSAN COMPANY LIMITED**
**1-1, Marunouchi 3-chome**

Chiyoda-ku
Tokyo 100 (JP)

(72) Inventor: **Ijitsu, Toshikazu**
**24-32, 2-chome, Nagauraekimae**
**Sodegaura-machi**
**Kimitsu-gun**
**Chiba-ken (JP)**
Inventor: **Sumitomo, Takashi**
**2326, Anesaki**
**Ichihara-shi**
**Chiba-ken (JP)**
Inventor: **Sawada, Michihiro**
**1218-2, Kamiizumi**
**Sodegaura-machi**
**Kimitsu-gun**
**Chiba-ken (JP)**
Inventor: **Funaki, Keisuke**
**216, Imazuasayama**
**Ichihara-shi**
**Chiba-ken (JP)**

(74) Representative: **Türk, Gille, Hrabal, Leifert**
**Brucknerstrasse 20**
**D-40593 Düsseldorf (DE)**

EP 0 318 793 B1

**Description**

Background of the Invention

1. Field of the Invention

The present invention relates to a styrene-based resin composition and more particularly to a styrene-based resin composition comprising a styrene-based resin with a syndiotacticity of at least 30 % in terms of a racemic pentad (A) and at least one specific ruber-like polymer (B), which is excellent in tensile modulus and Izod impact strength.

2. Description of the Related Art

Styrene-based resins have a disadvantage in that Izod impact strength is poor. In order to improve Izod impact strength, copolymerization of styrene-based resins and rubber-like polymers (e.g., HIPS resin and ABS resin), or compounding rubber-like polymers to the styrene-based resins has been widely carried out.

Styrene-based resins with improved Izod impact strength by compounding rubber-like polymer thereto or the above-described copolymerization have been widely used in various applications. However, a styrene-based resin with more improved Izod impact strength and heat resistance is desired depending on the purpose of use thereof.

Styrene-based resins which have heretofore been used are produced by radical polymerization, have an atactic configuration and furthermore are non-crystalline. Therefore, their heat resistance is not very high.

JP-A-62-257 950 discloses a resin composition containing (A) a styrene-based resin with mainly syndiotactic configuration (SPS) and (B) an acrylonitrile-butadiene-styrene polymer (ABS) as main components. However, said ABS exhibits no function as an elastomer even though blended in SPS. Therefore, its Izod impact strength and tensile modulus are not very high.

DE-A-12 97 328 and FR-A-23 11 645 and 22 59 874 disclose styrene-based resin compositions with an improved impact strength comprising atactic polystyrene (APS) and a butadiene/styrene copolymer (SBR). Although the physical properties of these compositions are improved, they do not meet the modern requirements, in particular in regard to Izod impact strenght and tensile modulus.

The present inventors have made extensive investigations to develop a styrene-based resin composition having physical properties markedly improved beyond the limits of properties of styrene-based resins produced conventionally.

As a result, the present inventors have discovered that if a styrene-based resin of high syndiotacticity as developed by the present inventors's group (JP-A-104818/1987) is mixed with a specific rubber-like polymer, there can be obtained a resin composition having the desired physical properties.

SUMMARY OF THE INVENTION

An object of the present invention is to provide a styrene-based resin composition having improved physical properties, in particular improved Izod impact strength and tensile modulus, which is suitable as a material for injection molding and extrusion molding.

The present invention relates to a styrene-based resin composition having excellent physical properties, such as a significantly improved Izod impact strength and tensile modulus as well as improved heat resistance, which comprises

65 to 99, preferably 70 to 95 % by weight of a styrene-based resin with syndiotacticity of at least 30 %, preferably at least 50 % in the terms of a racemic pentad (A) and

35 to 1, preferably 30 to 5 % by weight of at least one rubber-like polymer (B) selected from the group consisting of MAS (a graft copolymer obtained by graft polymerizing styrene to a copolymer of methyl methacrylate and butyl acrylate in a latex form), MBS (a graft copolymer obtained by adding styrene to a rubber latex which has been obtained by copolymerizing methyl-methacrylate and butadiene and graft-polymerizing them), MABS (a graft copolymer obtained by adding styrene and methyl methacrylate to a rubber latex which has been obtained by copolymerizing octylacrylate and butadiene (7:3) and then graft-polymerizing them, SBR (a graft copolymer obtained by graft-polymerizing styrene to polybutadiene), styrene-butylacrylate rubber and polybutadiene.

The compositions of the present invention show superior properties in regard to tensile modulus and Izod impact strength in comparison to those prepared according to the prior art and which lead to results which could not have been expected by the skilled worker in view of the prior art.

According to a preferred embodiment of the present invention the volume average particle diameter of the rubber-like polymer (B) is 0,1 to 4 $\mu$m, preferably 0,2 to 3 $\mu$m, according to the definition given below.

According to a further preferred embodiment of the present invention the styrene-based resin composition additionally comprises an inorganic filler (C) which is added preferably in an amount of 1 to 60, preferably 5 to 50, most preferably 10 to 40 % by weight, based on the total amount of (A), (B) and (C).

Also in the latter composition the volume average particle diameter of the rubber-like polymer (B) is preferably 0,1 to 4 $\mu$m, especially 0,2 to 3 $\mu$m.

## DESCRIPTION OF PREFERRED EMBODIMENTS

The resin composition of the present invention contains components (A) and (B) as main components.

Component (A) is a styrene-based resin with syndiotacticity of at least 30% in terms of a racemic pentad. The styrene-based resin with syndiotactic configuration refers to a polymer with a stereo structure such that phenyl groups or substituted phenyl groups as side chains are located alternately at opposite positions relative to the main chain composed of carbon-carbon bonds. The tacticity is quantitatively determined by a nuclear magnetic resonance method using a carbon isotope ($^{13}$C-NMR method). The tacticity as determined by the $^{13}$C-NMR method is indicated in terms of proportions of structural units continuously connected to each other, i.e., a pentad in which five structural units are connected to each other. The styrene-based resin with syndiotactic configuration has syndiotactic configuration such that the proportion in a pentad (racemic pentad) is at least 30% and preferably at least 50%. The styrene-based resin includes polystyrene, poly(alkylstyrene), poly(halogenated styrene), poly(alkoxystyrene), poly(vinyl benzoate), and their mixtures, and copolymers containing the above polymers as main components.

The poly(alkylstyrene) includes polymethylstyrene, polyethylstyrene, polyisopropylstyrene, and poly-(tert-butylstyrene). The poly(halogenated styrene) includes polychlorostyrene, polybromostyrene, and polyfluorostyrene. The poly(alkoxystyrene) includes polymethoxystyrene and polyethoxystyrene. Of these polymers polystyrene, poly(p-methylstyrene), poly(m-methylstyrene), poly(p-tert-butylstyrene), poly(p-chlorostyrene), poly(m-chlorostyrene), poly(p-fluorostyrene), and a copolymer of styrene and p-methylstyrene are most preferable.

The styrene-based resin to be used in the present invention is not critical in molecular weight. The weight average molecular weight is preferably at least 10 000 and particularly preferably at least 50 000. The molecular weight distribution is not critical and may be narrow or wide.

The styrene-based resin to be used in the present invention can be produced, for example, by polymerizing a styrene-based monomer (corresponding to the above styrene-based resin) with the use of a catalyst containing a titanium compound, and a condensate of water and trialkylaluminum in the presence of an inert hydrocarbon solvent or in the absence of a solvent (JP-A-187708/1987).

Various rubber-like polymers as stated below can be used as component (B):

1) an MAS elastomer, obtained by graft-polymerizing styrene to a copolymer of methyl methacrylate and butyl acrylate in a latex form. Such MAS elastomers are commercially available as EXL-2330 ® (produced by Rohm & Haas Co., Ltd., USA), KM-330 ® (produced by Rohm & Haas Co., Ltd., USA) and M-101 ® (produced by Kanegafuchi Kagaku Kogyo Co., Ltd.);

2) an MABS elastomer, e.g. a graft copolymer obtained by adding styrene and methyl methacrylate to a rubber latex which has been obtained by copolymerizing octyl acrylate and butadiene (7:3) and then graft polymerizing them;

3) an MBS elastomer; e.g. a graft copolymer obtained by adding styrene to a rubber latex which has been obtained by copolymerizing methyl methacrylate and butadiene and graft-polymerizing them. As the MBS elastomer, Metablen C-223 ® (produced by Mitsubishi Rayon Co., Ltd.) is commercially available;

4) an SBR elastomer (Metablen IP-2 ®, produced by Mitsubishi Rayon Co., Ltd.), obtained by graft-polymerizing styrene to polybutadiene or hydrogenated polybutadiene;

5) a styrene-butylacrylate rubber; and

6) polybutadiene.

Rubber-like polymers to be used as component (B) can be divided into the above groups. However, it is to be noted that the groups are not strictly divided and partially overlap with each other. One or more rubber-like polymers are used. More specifically, depending on the purpose of use of the resin composition and characteristics required, two or more rubber-like polymers selected from the same group can be used in combination, or two or more rubber-like polymers selected from different groups can be used in combination.

For example, when a rubber-like polymer belonging to a first group and a rubber-like polymer belonging to a second group are used in combination, they are chosen by considering that the rubber-like polymer of the first group exhibits good compatibility with component (A) and good compatibility with the rubber-like polymer of the second group. If the rubber-like polymers of the first and the second groups are used in combination, the compatibility between components (A) and (B) is increased and the physical properties of the composition are effectively improved. The amount of the rubber-like polymer of the first group is 5 to 95%, preferably 10 to 90% based on the total weight of the rubber-like polymers of the first and the second groups

The particle size of the rubber-like polymer varies with the purpose of use of the composition or characteristics required therefor and cannot be determined unconditionally. In general, the average particle diameter (volume average particle diameter) of the rubber-like polymer in the composition is 0.1 to 4 $\mu$m and preferably 0.2 to 3 $\mu$m. Herein, volume average particle diameter (d) is defined by the following equation.

$$d = \Sigma d_i^4 / \Sigma d_i^3,$$

wherein $d_i$ stands for a diameter of the i-th particle.

The proportion of Component (A) or (B) in the composition of the present invention within the claimed range can be determined appropriately depending on the type of Component (B), the purpose of use of the composition, and characteristics required therefor. The composition comprises 65 to 99% by weight of Component (A) and 35 to 1% by weight of Component (B), and preferably 70 to 95% by weight of Component (A) and 30 to 5% by weight of Component (B).

In another embodiment of the present invention, the composition contains (C) an inorganic filler as well as Components (A) and (B). The inorganic filler may be fibrous, granular or powder in the form. Examples of the fibrous filler are glass fiber, carbon fiber, and alumina fiber. Of these fiber, glass fiber and carbon fiber are particularly preferred. The shape of the glass fiber is cloth-like, mat-like, strand-like, short fiber-like, and filament-like. Of these fibers, strand-like glass fiber having a length of 0.05 to 13 mm and a fiber diameter of 5 to 15 $\mu$m is preferred. Most preferable is the strand-like glass fiber subjected to silane treatment.

As the carbon fiber, polyacrylonitrile (PAN)-based fiber is preferred. Bundles of the chopped PAN fiber with a length of about 3 mm and a diameter of 7 to 15 $\mu$m are more preferable.

Examples of granular or powder inorganic fillers are talc, carbon black, graphite, titanium dioxide, silica, mica, calcium carbonate, calcium sulfate, barium carbonate, magnesium carbonate, magnesium sulfate, barium sulfate, oxy-sulfate, tin oxide, alumina, kaolin, silicon carbide, and metal powder. Of these fillers, titanium dioxide is most preferable. The crystal form of titanium dioxide is rutile, brucite or anatase. Titanium dioxide of the rutile or anatase structure, having an average particle diameter of 0.15 to 0.40 $\mu$m is preferred. It may be treated with Zn, Al and Si. The proportion of Component (C) is 1 to 60% by weight, preferably 5 to 50% by weight and most preferably 10 to 40% by weight, based on the total amounts of (A) and (B).

The composition of the present invention is essentially composed of Components (A) and (B), and preferably of components (A) and (B) together with (C). If necessary, various additives such as a nucleating agent, an antioxidant, a plasticizer, an ultraviolet ray inhibitor, a lubricant, a coloring agent, an antistatic agent, a thermal stabilizer, and a flame retardant can be added.

The composition of the present invention can be prepared by compounding Components (A) and (B), and other components if necessary, and kneading the resulting mixture at a suitable temperature, e.g., 270 to 320°C. Compounding and kneading can be carried out by usual methods. More specifically, the melt kneading method using a kneader, a mixing roll, an extruder, a Vanbury mixer, a Henschel mixer and kneading roll, or the solution blending method can be employed.

The styrene-based resin composition of the present invention is excellent in heat resistance and at same time, in physical properties such as impact resistance, stiffness, tensile strength, and modulus in tension.

The styrene-based resin composition of the present invention is expected to be widely used as an industrial material for which heat resistance and various physical properties are required, particularly as raw material for injection molding or extrusion molding.

The present invention is described in greater detail with reference to the following examples.

4

REFERENCE EXAMPLE 1

(Preparation of Polystyrene having Syndiotactic Configuration)

2 L (L = liter) of toluene as a solvent, and 5 mmol of tetraethoxytitanium and 500 mmol (as aluminum atom) of methylaluminoxane as catalyst components were placed in a reactor, and 15 L of styrene was introduced thereinto and polymerized for 4 hours at 50°C.

After the completion of polymerization, the reaction product was washed with a mixture of hydrochloric acid and methanol to decompose and remove the catalyst components, and then dried to obtain 2.5 kg of a styrene polymer (polystyrene). The polymer was subjected to Soxhlet extraction using methyl ethyl ketone as a solvent to obtain 95% by weight of an extraction residue. The weight average molecular weight of the polymer was 800,000. A $^{13}$C-NMR analysis (solvent: 1,2-dichlorobenzene) showed an absorption at 145.35 ppm, ascribable to the syndiotactic configuration, and the syndiotacticity indicated in terms of racemi pentad as calculated from the peak area was 96%.

EXAMPLE 1

90 parts by weight of the polystyrene having syndiotactic configuration obtained in Reference Example 1, 10 parts by weight of a styrene-hydrogenated butadiene block copolymer (G-1652®, produced by Shell Chemical Co., Ltd.) as a rubber-like polymer, 0.1 part by weight of bis(2,4di-tert-butylphenyl)pentaerythritol diphosphite, 0.7 part by weight of tetraquis (methylene(3,5-di-tert-butyl-4-hydroxyhydrocinnamate))methane, and 0.5 part by weight of talc having an average particle diameter of 0.5 μm were kneaded and pelletized by the use of a twin-screw extruder. These pellets were injection molded to form a test piece, which was then measured for Izod impact strength (notched) and modulus in tension. The results are shown in Table 1.

EXAMPLES 2 AND 3

The procedure of Example 1 was repeated with the exception that the proportions of the polystyrene having syndiotactic configuration as obtained in Reference Example 1 and the styrene-hydrogenated butadiene block copolymer (G-1652®, produced by Shell Chemical Co., Ltd.) as the rubber-like polymer were changed as shown in Table 1. The results are shown in Table 1.

COMPARATIVE EXAMPLE 1

The procedure of Example 1 was repeated with the exception that the styrene-hydrogenated butadiene block copolymer was not used. The results are shown in Table 1.

EXAMPLE 4

The procedure of Example 2 was repeated with the exception that a methyl methacrylate-butyl acrylate-styrene copolymer (KM330®, produced by Rhom & Haas Co.,Ltd., USA) was used as the rubber-like polymer. The results are shown in Table 1.

EXAMPLE 5

The procedure of Example 2 was repeated with the exception that a styrene-butadiene block copolymer (TR-1102®, produced by Shell Chemical Co., Ltd.) was used as the rubber-like polymer. The results are shown in Table 1.

EXAMPLE 6

The procedure of Example 2 was repeated with the exception that polybutadiene (NF35AS®, produced by Asahi Kasei Co., Ltd.) was used as the rubber-like polymer. The results are shown in Table 1.

5

Table 1

| No. | Composition | | | | Physical Properties | |
|---|---|---|---|---|---|---|
| | Styrene Polymer (wt%) | Rubber-Like Polymer | | | Izod Impact Strength (notched) N·cm/cm (kg·cm/cm) | Modulus in Tension N/cm² (kg/cm²) |
| | | Type | Amount (wt%) | Volume Average Particle Diameter (μm) | | |
| Example 1 | 90 | SEBS *1 | 10 | 2.0 | 41,2 (4.2) | 372780 (38000) |
| Example 2 | 80 | SEBS | 20 | 2.5 | 71,6 (7.3) | 333540 (34000) |
| Example 3 | 70 | SEBS | 30 | 3.0 | 118,7 (12.1) | 294300 (30000) |
| Example 4 | 80 | MAS *2 | 20 | 0.3 | 78,5 (8.0) | 343350 (35000) |
| Example 5 | 80 | SBS *3 | 20 | 2.5 | 53,0 (5.4) | 313920 (32000) |
| Example 6 | 80 | Polybutadiene | 20 | 3.5 | 37,3 (3.8) | 294300 (30000) |
| Comparative Example 1 | 100 | - | - | - | 21,6 (2.2) | 392400 (40000) |

*1   Styrene-hydrogenated butadiene block copolymer

*2   Methyl methacrylate-butyl acrylate-styrene copolymer

*3   Styrene-butadiene block copolymer

EXAMPLE 7

100 parts by weight of a mixture consisting of 66.7% by weight of the polystyrene having syndiotactic configuration as obtained in Reference Example 1, 28.6% by weight of an ethylene-propylene rubber (EP02P®, produced by Nippon Synthetic Rubber Co., Ltd.) and 4.7% by weight of a styrene-hydrogenated

6

butadiene block copolymer (G-1652®, produced by Shell Chemical Co., Ltd.) and 1 part by weight of talc (FFR®; average particle diameter; 0.6 $\mu$m, produced by Asada Seifun Co., Ltd.) were kneaded in a single-screw extruder having an inner diameter of 25 mm and injection molded by the use of a minimat molding machine to form a test piece, which was then measured for mechanical strength. The test piece was also measured for Vicat softening temperature according to JIS K 7206. The results are shown as follows.

| | |
|---|---|
| Modulus in Tension | 294300 N/cm$^2$ (30,000 kg/cm$^2$) |
| Tensile Strength | 5396 N/cm$^2$ (550 kg/cm$^2$) |
| Izod Impact Strength (notched) | 114,8 N•cm/cm (11.7 kg•cm/cm) |
| Vicat Softening Temperature | 210°C |
| Volume Average Particle Diameter of Rubber-Like Polymer in Composition | 3.5 $\mu$m |

REFERENCE EXAMPLE 2

(Production of Polystyrene having Mainly Syndiotactic Configuration)

2 L of toluene as a solvent, and 5 mmol of tetraethoxytitanium and 500 mmol (as aluminum atom) of methylaluminoxane as catalyst components were placed in a reactor, and 15 L of styrene was introduced thereinto and polymerized for 4 hours at 55°C.

After the completion of polymerization, the reaction product was washed with a mixture of hydrochloric acid and methanol to decompose and remove the catalyst components, and then dried to obtain 2.5 kg of a styrene polymer (polystyrene). The polymer was subjected to Soxhlet extraction using methyl ethyl ketone as a solvent to obtain 97% by weight of an extraction residue. The weight average molecular weight of the extraction residue was 400,000. A $^{13}$C-NMR analysis (solvent: 1,2-dichlorobenzene) of the polymer showed an absorption at 145.35 ppm, ascribable to the syndiotactic configuration, and the syndiotacticity indicated in terms of racemi pentad as calculated from the peak area was 98%.

REFERENCE EXAMPLE 3

Commercially available granular resin elastomers (rubber-like polymers) were dispersed in acetone or methanol, sprayed to a micro mesh for observation under an electron microscope, and then observed under the electron microscope to determine the volume average particle diameter. The results are shown below.

(1) MAS Elastomer (KM-330®, produced by Rohm & Haas Co., Ltd., USA) 0.3 $\mu$m
(2) MAS Elastomer (EXL-2330®, produced by Rohm & Haas Co., Ltd., USA) 0.5 $\mu$m
(3) MAS Elastomer (M-101®, produced by Kanegafuchi Kagaku Kogyo Co., Ltd.) 0.5 $\mu$m
(4) MBS Elastomer (C-223®, produced by Mitsubishi Rayon Co., Ltd.) 0.4 $\mu$m
(5) MABS Elastomer (HIA-15®, produced by Mitsubishi Rayon Co., Ltd.) 0.1 $\mu$m
(6) MAS Elastomer (W-529®, produced by Kureha Kagaku Co., Ltd.) 0.2 $\mu$m

EXAMPLE 8

100 parts by weight of a mixture of 90% by weight of the styrene polymer having syndiotactic configuration as obtained in Reference Example 2 and 10% by weight of a granular MAS elastomer (EXL-2330®, produced by Rohm & Haas Co., Ltd., USA), 1 part by weight of PTBBA-A1 (aluminum p-tert-butyl-benzoate) as a nucleating agent, 0.7 part by weight of (2,6-di-tert-butyl-4-methylphenyl)pentaerythritol diphosphite (PEP-36®, produced by Adeka Agas Corp.) as an antioxidant and 0.1 part by weight of 2,6-di-tert-butyl-4-methylphenol (Sumiriser BHT®, produced by Sumitomo Kagaku Co., Ltd.) were kneaded and pelletized by the use of a twin screw kneading extruder.

The pellets thus obtained were injection molded to form a test piece, which was then measured for Izod impact strength (notched) (according to JIS K7110), modulus in tension (according to JIS K7113) and Vicat softening temperature (according to JIS K7206). The results are shown in Table 2.

A slice for examination under an electron microscope was cut away from the Izod test piece and observed by the phase contrast method. The particle diameter of the elastomer (rubber) as determined by the above method was 0.5 $\mu$m.

EXAMPLE 9

The procedure of Example 8 was repeated with the exception that a mixture of 80% by weight of the styrene polymer having syndiotactic configuration as obtained in Reference Example 2 and 20% by weight of MAS elastomer (M-101®, produced by Kanegafuchi Kagaku Co., Ltd.) was used. The results are shown in Table 2.

The rubber particle diameter as determined from a slice in the same manner as in Example 8 was 0.5 μm.

EXAMPEL 10

The procedure of Example 8 was repeated with the exception that a mixture of 70% by weight of the styrene polymer having syndiotactic configuration as obtained in Reference Example 2 and 30% by weight of MBS elastomer (C-223®, produced by Mitsubishi Rayon Co., Ltd.) was used. The results are shown in Table 2.

The rubber particle diameter as determined after dying a slice with osmic acid was 0.4 μm.

EXAMPLE 11

The procedure of Example 8 was repeated with the exception that a mixture of 80% by weight of the styrene polymer having syndiotactic configuration as obtained in Reference Example 2, and 5% by weight of MBS elastomer (C-223®, produced by Mitsubishi Rayon Co., Ltd.) and 15% by weight of MABS (HIA-15®, produced by Mitsubishi Rayon Co., Ltd.) as granular elastomers was used. The results are shown in Table 2.

The Izod test piece thus obtained was dissolved in hot xylene, and the gel portion was filtered and dried, dispersed in acetone and then observed under an electron microscope. Particles having a diameter of 0.4 μm and particles having a diameter of 0.1 μm were observed, and the area fraction in the observation area was about 1:3.

EXAMPLE 12

The procedure of Example 8 was repeated with the exception that a mixture of the styrene polymer having syndiotactic configuration as obtained in Reference Example 2, and 2% by weight of MAS elastomer (M-101®, produced by Kanegafuchi Kagaku Kogyo Co., Ltd.) and 30% by weight of MAS elastomer (W-529®, produced by Kureha Kagaku Co., Ltd.) was used. The results are shown in Table 2.

An electron microscopic examination after gel extraction showed particles having a diameter of 0.5 μm and particles having a diameter of 0.2 μm. The area fraction in the observation area was about 1:15.

EXAMPLE 13

The procedure of Example 8 was repeated with the exception that a mixture of 85% by weight of the styrene polymer having syndiotactic configuration as obtained in Reference Example 2, and 10% by weight of MBS elastomer (C-223®, produced by Mitsubishi Rayon Co., Ltd.) and 5% by weight of SBS elastomer (TR-1102®, produced by Shell Chemical Co., Ltd.) as granular elastomers was used. The results are shown in Table 2.

An electron microscopic examination of the gel showed particles having a diameter of 0.4 μm.

EXAMPLE 14

50 parts by weight of polybutadiene having an average particle diameter of 1.0 μm, 20 parts by weight of styrene, 0.1 part by weight of potassium rhosinate, 0.1 part by weight of potassium hydroxide, 0.2 part by weight of sodium pyrophosphate, 0.3 part by weight of dextrose, 0.01 part by weight of ferrous sulfate and 150 parts by weight of water were placed in a reactor equipped with a stirrer. After purging with nitrogen, the temperature was raised to 70°C, and 0.2 part by weight of cumene hydroperoxide was added to perform the polymerization for one hour.

An emulsion consisting of 30 parts by weight of styrene, 1.5 parts by weight of potassium rhosinate, 0.1 part by weight of potassium hydroxide, 0.2 part by weight of cumene hydroperoxide and 50 parts by weight of water was separately prepared and added to the polymerization system over 3 hours.

8

The polymerization reaction was continued for one hour while maintaining the jacket temperature at 70°C.

To the latex above obtained were added 1.0 part by weight of 2,6-di-tert-butyl-p-cresol as an anti-aging agent and 2.0 parts by weight of sulfuric acid. The latex was solidified by heating, filtered, washed with water and dried to obtain a granular elastomer (SBR). The particle diameter was 1.2 μm.

Thereafter, the procedure of Example 8 was repeated with the exception that a mixture of 10% by weight of the above granular eastomer and 90% by weight of the styrene polymer having syndiotactic configuration as obtained in Reference Example 2 was used. The results are shown in Table 2.

EXAMPLE 15

70 parts by weight of a polybutadiene latex having an average particle diameter of 2.4 μm, 200 parts by weight of water and 0.3 part by weight of potassium persulfate were placed in a reactor, and 15 parts by weight of methyl methacrylate was dropped over 30 minutes while maintaining the temperature at 70°C to perform polymerization. After the completion of dropwise addition, the polymerization was completed by maintaining at the same temperature for one hour.

Then, 15 parts by weight of styrene was dropped over 30 minutes to perform polymerization, and the polymerization was completed by maintaining for 60 minutes.

The average particle diameter of the graft copolymer latex as obtained above which was determined by an electron microscopic observation was 2.5 μm.

Subsequently, the graft copolymer latex was salted and solidified by adding an aqueous aluminum chloride solution, filtered, washed with water and dried to obtain a granular elastomer.

Thereafter the procedure of Example 8 was repeated with the exception that a mixture of 10% by weight of the above granular elastomer and 90% by weight of the styrene polymer having syndiotactic configuration as obtained in Reference Example 2 was used. The results are shown in Table 2.

EP 0 318 793 B1

### Table 2

| | | Granular Elastomer having Volume Average Particle Diameter of 0.35 µm or more | | | Other Rubber-Like Polymer | | | |
| No. | Styrene Polymer (wt%) | Type | Particle Diameter (µm) | (wt%) | Type | Particle Diameter (µm) | (wt%) | Vicat Softening Temp. (°C) |
|---|---|---|---|---|---|---|---|---|
| Example 8 | 90 | MAS[1] | 0.5 | 10 | – | – | – | 253 |
| Example 9 | 80 | MAS[2] | 0.5 | 20 | – | – | – | 244 |
| Example 10 | 70 | MBS[3] | 0.4 | 30 | – | – | – | 232 |
| Example 11 | 80 | MBS[3] | 0.4 | 5 | MABS[4] | 0.1 | 15 | 237 |
| Example 12 | 68 | MAS[2] | 0.5 | 2 | MAS[5] | 0.2 | 30 | 228 |
| Example 13 | 85 | MBS[3] | 0.4 | 10 | SBS[6] | shapeless | 5 | 240 |
| Example 14 | 90 | SBR | 1.2 | 10 | – | – | – | 250 |
| Example 15 | 90 | MBS | 2.5 | 10 | – | – | – | 248 |

1) EXL-2330®, 2) M-101®, 3) C-223®, 4) HIA-15®

5) W-529®, 6) TR-1102®

REFERENCE EXAMPLE 4

(Production of Polystyrene having Mainly Syndiotactic Configuration)

2 L of toluene as a solvent, and 1 mmol of cyclopentadienyltitanium trichloride and 0.8 mol (as aluminum atom) of methylaluminoxane as catalyst components were placed in a reactor, and 3.6 L of styrene was added and polymerized at 20°C for one hour. After the completion of polymerization, the reaction product was washed with a mixture of hydrochloric acid and methanol to decompose and remove the catalyst components, and then dried to obtain 330 g of a polymer.

This polymer was subjected to Soxhlet extraction using methyl ethyl ketone as a solvent to obtain 95% by weight of an extraction residue. The polymer (extraction residue) had a weight average molecular weight of 290,000, a number average molecular weight of 158,000 and a melting point of 270°C. A $^{13}$C-NMR analysis of the polymer showed an absorption at 145.35 ppm, ascribable to the syndiotactic structure, and the syndiotacticity indicated in terms of pentad as calculated from the peak area was 96%.

**Claims**

1. A styrene-based resin composition comprising 65 to 99 % by weight of the styrene-based resin with syndiotacticity of at least 30 % in the terms of a racemic pentad (A) and 35 to 1 % by weight of at least one rubber-like polymer (B) selected from the group consisting of MAS, MBS, MABS, SBR, styrene-butyl acrylate rubber and polybutadiene, and optionally an inorganic filler (C).

2. The composition as claimed in Claim 1 wherein the volume average particle diameter of the rubber-like polymer (B) is 0.1 to 4 $\mu$m.

3. The composition as claimed in any of Claims 1 and 2, wherein the amount of the inorganic filler (C) is 1 to 60 % by weight, based on the total amounts of (A) and (B).

4. The composition as claimed in Claim 3 wherein the volume average particle diameter of the rubber-like polymer (B) is 0.1 to 4 $\mu$m.

**Patentansprüche**

1. Harzzusammensetzung auf Styrol-Basis, enthaltend
65 bis 99 Gew.-% eines Harzes auf Styrol-Basis mit einer Syndiotaktizität von mindestens 30 %, ausgedrückt als racemische Pentade (A), und
35 bis 1 Gew.-% mindestens eines kautschukartigen Polymers (B), ausgewählt aus der Gruppe, die besteht aus MAS, MBS, MABS, SBR, Styrol/Butylacrylat-Kautschuk und Polybutadien und gegebenenfalls einen anorganischen Füllstoff (C).

2. Zusammensetzung nach Anspruch 1, worin der volumendurchschnittliche Teilchendurchmesser des kautschukartigen Polymers (B) 0,1 bis 4 $\mu$m beträgt.

3. Zusammensetzung nach einem der Ansprüche 1 und 2 worin die Menge des anorganischen Füllstoffs (C) 1 bis 60 Gew.-%, bezogen auf die Gesamtmengen von (A) und (B) beträgt.

4. Zusammensetzung nach Anspruch 3, worin der volumendurchschnittliche Teilchendurchmesser des kautschukartigen Polymers (B) 0,1 bis 4 $\mu$m beträgt.

**Revendications**

1. Composition de résine à base de styrène comprenant de 65 à 99% en poids de résine à base de styrène ayant une syndiotacticité d'au moins 30% en termes d'un mélange racémique d'éléments pentavalents (A), de 35 à 1% en poids d'au moins un polymère de type caoutchouc (B) choisi dans le groupe consistant en MAS, MBS, MABS, SBR, caoutchouc de styrène-acrylate de butyle et polybutadiène, et facultativement un agent de remplissage inorganique (C).

2. Composition selon la revendication 1, dans laquelle le diamètre particulaire moyen du polymère de type caoutchouc (B) est compris entre 0,1 et 4 $\mu$m.

3. Composition selon l'une des revendications 1 et 2, dans laquelle la quantité d'agent de remplissage inorganique (C) est comprise entre 1 et 60% en poids par rapport aux quantités totales de (A) et de (B).

4. Composition selon la revendication 3, dans laquelle le diamètre particulaire moyen du polymère de type caoutchouc (B) est compris entre 0,1 et 4 $\mu$m.